Europäisches Patentamt

**European Patent Office**

Office européen des brevets

(19)

(11) **EP 1 233 855 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00967413.6**

(22) Anmeldetag: **29.09.2000**

(51) Int Cl.$^7$: **B29B 17/00**, B29C 47/10

(86) Internationale Anmeldenummer:
**PCT/AT00/00258**

(87) Internationale Veröffentlichungsnummer:
**WO 01/039948 (07.06.2001 Gazette 2001/23)**

(54) **VORRICHTUNG ZUM VORBEHANDELN UND ANSCHLIESSENDEN PLASTIFIZIEREN ODER AGGLOMERIEREN VON KUNSTSTOFFEN**

DEVICE FOR PRETREATING AND THEN PLASTIFYING OR AGGLOMERATING PLASTICS

DISPOSITIF PERMETTANT DE PRETRAITER, PUIS DE PLASTIFIER OU D'AGGLOMERER DES MATIERES PLASTIQUES

(84) Benannte Vertragsstaaten:
**AT BE CH CY DE DK ES FI FR GB GR IE IT LI LU MC NL PT SE**

(30) Priorität: **02.12.1999 AT 203399**

(43) Veröffentlichungstag der Anmeldung:
**28.08.2002 Patentblatt 2002/35**

(73) Patentinhaber:
• **BACHER, Helmut**
  **A-4490 St. Florian (AT)**
• **SCHULZ, Helmuth**
  **A-4490 St. Florian (AT)**
• **WENDELIN, Georg**
  **A-4033 Linz (AT)**

(72) Erfinder:
• **BACHER, Helmut**
  **A-4490 St. Florian (AT)**
• **SCHULZ, Helmuth**
  **A-4490 St. Florian (AT)**
• **WENDELIN, Georg**
  **A-4033 Linz (AT)**

(74) Vertreter: **Wildhack, Helmut, Dipl.-Ing. Dr. Patentanwälte**
  **Dipl.-Ing. Dr. Helmut Wildhack**
  **Dipl.-Ing. Dr.Gerhard Jellinek**
  **Landstrasser Hauptstrasse 50**
  **1030 Wien (AT)**

(56) Entgegenhaltungen:
  EP-A- 0 123 771          WO-A-95/34418
  DE-A- 3 525 554          US-A- 4 222 728
  US-A- 5 988 865

**Beschreibung**

Die Erfindung bezieht sich auf eine Vorrichtung zum Vorbehandeln und anschließenden Plastifizieren oder Agglomerieren von Kunststoffen, insbesondere thermoplastischem Abfallkunststoff zu Recyclingzwecken, mit einem Behälter, der oben eine Einbringeöffnung für das zu verarbeitende Material hat und in welchem zumindest ein umlaufendes Zerkleinerungs- und/oder Mischwerkzeug angeordnet ist, wobei das im Behälter behandelte Material in das Gehäuse einer dieses Material plastifrzierenden oder agglomerierenden Schnecke, z.B. einer Extruderschnecke, geleitet wird, welches Gehäuse vorzugsweise an den Behälter angeschlossen ist.

Vorrichtungen dieser Art sind in vielen Ausführungsformen bekannt, z.B. (für eine Plastifiziervorrichtung) aus US-A 5,988,865. Die Vorbehandlung des zu verarbeitenden Kunststoffmateriales ist hiebei zumeist eine Zerkleinerung, welche jedoch auch ersetzt sein kann durch bzw. kombiniert sein kann mit einer Mischung und/oder Trocknung und/ oder Erwärmung und/oder Kristallisation und/oder Verdichtung des Gutes. Bei den meisten Vorrichtungen dieser Art drücken die im Behälter umlaufenden Werkzeuge das vorbehandelte Material direkt in das an den Behälter angeschlossene Gehäuse einer Extruderschnecke ein. Es sind jedoch auch Vorrichtungen bekannt, bei welchen das aus dem Behälter austretende Material zunächst in ein Rohr eintritt, in welchem eine Förderschnecke angeordnet sein kann. Das durch dieses horizontal oder vertikal angeordnete Rohr geführte Material gelangt dann zum Gehäuse einer Extruderschnecke, welche die abschließende Plastifizierung des Materiales besorgt.

Die Schneckenlänge einer üblichen Plastifizierschnecke lässt sich grob in drei Zonen einteilen, und zwar in die der Einzugsöfmung benachbarte Einzugszone, dann in die an die Einzugszone anschließende Kompressions- oder Aufschmelzzone und schließlich an die an sie anschließende, dosierende Austrags- oder Meteringszone. Üblicherweise ist die Gangtiefe der Meteringszone geringer als die Gangtiefe in der Einzugszone, wodurch das in der Einzugszone noch lose Material, z.B. flockiges Material, im Laufe der Schneckenlänge immer mehr komprimiert wird. Für die Verarbeitung von handelsüblichem Kunststoff, z.B. Polyethylen, haben handelsübliche Extruder in der Meteringszone eine Gangtiefe von etwa 5% des Schneckendurchmessers.

Die meisten dieser bekannten Konstruktionen befriedigen nicht im Hinblick auf die am Ausgang der Schnecke erhaltene Qualität des bearbeiteten Kunststoffmateriales und/oder im Hinblick auf den Ausstoß der Schnecke. Untersuchungen haben gezeigt, dass die Anforderungen an die dem Behälter nachfolgende Schnecke, zumeist eine Plastifizierschnecke, im Laufe des Betriebes ungleich sind und dass dies darauf zurückzuführen ist, dass einzelne Partien des zu verarbeitenden Gutes im Behälter länger verweilen als andere Partien. Die mittlere Verweilzeit des Materiales im Behälter errechnet sich aus dem Füllgewicht im Behälter geteilt durch den Austrag der Schnecke pro Zeiteinheit. Diese mittlere Verweilzeit ist aber - wie erwähnt - für große Teile des zu verarbeitenden Materiales in der Regel nicht gegeben, sondern es stellen sich unregelmäßige wesentliche Abweichungen von diesem Mittelwert nach oben und nach unten ein. Diese Abweichungen können zurückzuführen sein auf unterschiedliche Beschaffenheit der in den Behälter nach und nach eingebrachten Gutpartien, z.B. unterschiedliche Beschaffenheit oder unterschiedliche Stärke des Kunststoffmateriales, z.B. Folienreste usw., aber auch durch unkontrollierbare Zufälligkeiten.

Für thermisch und mechanisch homogenes Material stellt sich eine Qualitätsverbesserung des am Ausgang der Schnecke erhaltenen Gutes ein, wenn die Gangtiefe der Meteringszone der Schnecke sehr groß und die Schneckendrehzahl sehr gering gehalten wird. Untersuchungen haben gezeigt, dass der Grund dafür ist, dass das verarbeitete Material durch eine derartige Schneckengeometrie einer geringen Scherung unterworfen wird. Die Scherung des verarbeiteten Gutes (Schergeschwindigkeit) errechnet sich aus der Umfangsgeschwindigkeit der Schnecke, geteilt durch die Gangtiefe der Schnecke. Durch eine solche Schneckengeometrie wird das Material mechanisch und thermisch nur gering beansprucht, sodass die Molekülketten des Kunststoffmateriales nicht oder nicht wesentlich geschädigt werden.

Wird jedoch Wert gelegt auf eine Ausstoßerhöhung der Schnecke oder eine Leistungsverbesserung etwa einer Zerreißer-Extruderkombination, dann muss die Schneckendrehzahl angehoben werden, was bedeutet, dass auch die Scherung angehoben wird. Dadurch wird aber das verarbeitete Material von der Schnecke mechanisch und thermisch höher beansprucht, d.h., dass die Gefahr besteht, dass die Molekülketten des Kunststoffmateriales geschädigt werden. Als weiterer Nachteil tritt ein höherer Verschleiß der Schnecke und ihres Gehäuses auf, insbesondere bei der Verarbeitung von Recyclingmaterial durch die in diesem Material enthaltenen Verunreinigungen, z.B. abrasive Teilchen, Metallteile usw., welche stark abnützend auf die aneinandergleitenden Metallteile der Schnecke bzw. ihrer Lagerung einwirken.

Sowohl bei langsam laufender und tief geschnittener Schnecke (große Gangtiefe) als auch bei rasch laufender Schnecke wirkt sich aber die bereits erwähnte, unterschiedliche Qualität einzelner der Schnecke zugeführter Materialpartien, z.B. unterschiedliche Flockengröße und/oder unterschiedliche Temperatur des Kunststoffmateriales, nachteilig in Hinblick auf Inhomogenitäten des am Schneckenausgang erhaltenen Kunststoffmateriales aus. Um diese Inhomogenitäten auszugleichen, wird in der Praxis das Temperaturprofil des Extruders angehoben, was bedeutet, dass dem Kunststoff zusätzliche Energie zugeführt werden muss, was die erwähnten thermischen Schädigungen des Kunststoffmateriales und einen erhöhten Energiebedarf zur Folge hat. Außerdem wird dadurch das am Extruderausgang erhaltene Kunststoffmaterial in seiner Viskosität reduziert, also dünnflüssiger, was Schwierigkeiten bei der Weiterverarbeitung dieses Materiales mit sich bringt.

Daraus ist ersichtlich, dass die für den Erhalt einer guten Materialqualität am Schneckenausgang günstigen Verfahrensparameter einander widersprechen. Die Erfindung setzt sich zur Aufgabe, diese Nachteile zu überwinden und eine Vorrichtung der eingangs geschilderten Art so zu verbessern, dass bei gleichbleibender Materialqualität mit höherem Schneckenausstoß gearbeitet werden kann bzw. bei gleichem Schneckenausstoß das Temperaturprofil des Extruders wesentlich, z.B. bis zu 20°C tiefer gehalten werden kann, was eine Energieeinsparung und eine bessere Qualität des erhaltenen Materiales bedeutet.

Die Erfindung geht aus von der durch Untersuchungen gewonnenen Erkenntnis, dass die theoretische Verweilzeit des zu verarbeitenden Kunststoffgutes im Behälter von wesentlichem Einfluss ist, insbesondere, wenn dieses Gut in schwierig zu verarbeitender Form vorliegt. Gelingt es, die mechanische und thermische Homogenität des Kunststoffmateriales im Behälter zu steigem, dann wirkt sich dies direkt auf die Qualität des Plastifikates bzw. Agglomerates günstig aus, da die Schnecke bereits Gut zumindest annähernd gleicher mechanischer und thermischer Homogenität zugeleitet wird und daher eine solche Homogenität nicht erst durch die Schnecke erzielt werden muss. Mit anderen Worten vereinfacht ausgedrückt Je mehr die Qualität der Vorbearbeitung des Kunststoffgutes im Behälter gesteigert werden kann, desto weniger Probleme ergeben sich bei der nachfolgenden Bearbeitung (Plastifizierung oder Agglomerierung) des Kunststoffgutes im Schneckengehäuse. Die Untersuchungen haben nun zum überraschenden Ergebnis geführt, dass die zuvor erwähnte Aufgabe sich erfindungsgemäß dadurch in einfacher Weise lösen lässt, dass der Durchmesser des Behälters zum Durchmesser der Schnecke in folgender Beziehung steht:

$$D = 10. \sqrt[3]{K.d^2},$$

worin

    D der Innendurchmesser des kreiszylindrischen Behälters in mm ist oder der Innendurchmesser in mm eines auf gleiches Fassungsvolumen umgerechneten fiktiven kreiszylindrischen Behälters gleicher Höhe,
    d der Schneckendurchmesser in mm ist und
    K eine dimensionslose Konstante ist, welche größer oder gleich 190 ist.

Die genannte Formel ist eine Faustformel, welche durch Versuche empirisch gefunden wurde. Daher spielt es keine Rolle, wenn auf beiden Seiten des Gleichheitszeichens unterschiedliche Dimensionen stehen.

Durch die Vergrößerung des Behälters (zumeist ein Zerreißerbehälter) im Vergleich zu herkömmlichen Größen wird erreicht, dass die mechanische und thermische Homogenität des im Behälter vorbehandelten Kunststoffmateriales vergleichmäßigt wird, auch wenn dieses Kunststoffmaterial heikel zu verarbeiten ist. Der Grund dafür liegt darin, dass das Masseverhältnis der laufend zugegebenen unbearbeiteten "kalten" Materialportionen zu der im Behälter vorhandenen, bereits teilweise bearbeiteten Materialmenge im Vergleich zu den üblicherweise vorliegenden Bedingungen geringer ist und dass die mittlere Verweilzeit des Kunststoffmateriales im Behälter wesentlich erhöht wird. Diese Verringerung des Masseverhältnisses wirkt sich günstig aus auf die thermische und mechanische Homogenität des aus dem Behälter in das Schneckengehäuse eintretenden Materiales und somit direkt auf die Qualität des Plastifikates bzw. Agglomerates am Ende der Extruder- bzw. der Agglomerierschnecke, denn die theoretische Verweilzeit des bearbeiteten Kunststoffmateriales im Behälter wird annähernd konstant. Außerdem ist die Bedienbarkeit einer solchen Anlage mit vergrößertem Behälter bezüglich der Genauigkeit der Aufgabeportionen unempfindlicher als die bekannten Anlagen.

Beispielsweise ergeben sich für einen Zerreißerbehälter üblicher Bauart folgende Werte bei der Verarbeitung von Polyethylenfolien mit einem durchschnittlichen Melt-Flow-Index (MFI) von 0,5, einer durchschnittlichen Foliendicke s von 80μ und einem durchschnittlichen Schüttgewicht Sg im Zerreißerbehälter von 0,225 kg/dm³:

| | |
|---|---|
| Zerreißerbehälterdurchmesser | D = 1000 mm |
| Zerreißerbehälterhöhe | H = 1000 mm |
| Schneckendurchmesser | d = 80 mm |
| Schneckenlänge | l = 1600 mm |
| Im Zerreißerbehälter aufbereitetes Gut (Flocken) | Zi = 38 kg |
| Extruderausstoß | Ea = 320 kg/h |

Daraus errechnet sich die theoretische Verweilzeit des Materiales im Behälter Zi: Ea = 38:320 = 0,12 h = 7,13 min.

Diese übliche Bauart entspricht nach obiger Formel einem Wert von K = 157.

Vergrößert man nun bei ansonsten gleicher Bauweise im Sinne der Erfindung den Behälterdurchmesser und die Behälterhöhe je auf 1300 mm, so ergibt sich:

| | |
|---|---|
| Zerreißerbehälterdurchmesser | D = 1300 mm |
| Zerreißerbehälterhöhe | H = 1300 mm |
| Schneckendurchmesser | d = = 80 mm |
| Schneckenlänge | l = 1600 mm |
| | |
| Im Zerreißerbehälter aufbereitetes Gut (Flocken) | Zi = 83 kg |
| Extruderausstoß | Ea = 385 kg/h |

Daraus errechnet sich die theoretische Verweilzeit Zi: Ea = 83:385 = 0,22 h = 12,94 min.

Diese Bauweise entspricht einem Wert für K = 343.

Die beiden Werte für die theoretische Verweilzeit gegenübergestellt, ergeben eine Erhöhung der Verweilzeit um das 1,81-fache. Dies ergibt eine Erhöhung des Ausstoßes um das etwa 1,2-fache (bei gleicher Schneckendrehzahl von 160 U/min.). Eine mittlere Verweilzeiterhöhung um 83% erbringt daher eine Ausstoßerhöhung um 20%.

Für einen gewählten K-Wert von 343 ergeben sich aus obiger Formel für übliche vorgegebene Schneckendurchmesser d (in mm) folgende Behälterdurchmesser D (in mm):

| Schneckendurchmesser (mm) | Behälterdurchmesser (mm) |
|---|---|
| 50 | 950 |
| 85 | 1353 |
| 105 | 1558 |
| 120 | 1703 |
| 145 | 1932 |

Legt man nun Wert auf eine zusätzliche Ausstoßerhöhung bzw. Leistungsverbesserung der erwähnten Zerreißer-Extruderkombination, dann kann bei gleich großen Extrudem, also gleich großem Schneckendurchmesser, die Schneckengangtiefe vergrößert und die Drehzahl der Schnecke angehoben werden, ohne dass das verarbeitete Material in der Schnecke einer höheren Scherung unterworfen wird. Dies bedeutet, dass auch die Massetemperatur des Plastifikates und somit auch der Gesamtenergiebedarf für den Aufbereitungsvorgang verringert werden. Insbesondere für die Verarbeitung thermisch instabiler Thermoplaste ist dies von Bedeutung. Die Ausnützung des größeren Behältervolumens ermöglicht es somit nicht nur, den Durchsatz der Zerreißer-Extruderkombination im Vergleich zu bisher üblichen Bauarten auf über 50% anzuheben, sondern auch erheblich an Energie zu sparen. Beispielsweise zeigt die Enthalpie-Kurve von Polyäthylen mit einer Dichte von 0,92 g/cm$^3$ eine Aufschmelzenergieeinsparung (bei 20°C geringerer Verarbeitungstemperatur) von 25 W/kg, d.s. fast 14,5 % Energieeinsparung.

Eine Vergrößerung der Behälterhöhe (bei unverändertem Durchmesser) bringt zwar eine Volumenvergrößerung des Behälters, wirkt sich jedoch praktisch nicht in einer Qualitätsverbesserung des verarbeiteten Materiales aus. Der Grund hiefür liegt darin, dass sich durch die im Behälter umlaufenden Werkzeuge eine Form des umlaufenden Gutes einstellt (Mischtrombe), die eine bestimmte Höhe nicht übersteigt, d.h., das entlang der Behälterwand umlaufende Kunststoffmaterial fällt nach Erreichen der maximalen Höhe wieder nach innen und unten in den Bereich der Behältermitte zurück. Aus diesen Gründen wird üblicherweise die Behälterhöhe gleich dem Behälterdurchmesser gewählt.

Wie erwähnt, muß jedoch der Behälter nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylindrische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hiebei die sich einstellende Mischtrombe (unter Berücksichtigung des Sicherheitsabstandes) wesentlich übersteigen, bleiben unberücksichtigt, da diese übermäßige Behälterhöhe nicht genutzt wird und daher auf die Materialverarbeitung keinen Einfluss mehr hat.

Die Behältervergrößerung hat theoretisch nach oben keine Grenze. Praktisch ergibt sich jedoch diese Grenze durch fertigungstechnische Gründe und Transportgründe. Versuche haben jedoch ergeben, dass sich besonders günstige Konstruktionen ergeben, wenn K größer ist als 200.

In analoger Weise lässt sich die Gangtiefe der Schnecke nicht beliebig vergrößern, denn der verbleibende Kemdurchmesser der Schnecke muss das auf die Schnecke aufgebrachte Drehmoment aufnehmen können. Hiebei können sich Probleme ergeben bei einer Konstruktion, bei welcher die Achse der Schnecke tangential zum Querschnitt des Behälters liegt, wobei das Gehäuse der Schnecke eine in seiner Mantelwand liegende Einzugsöffnung für das von der Schnecke zu erfassende Material hat und die Schnecke an ihrem einen Stimende mit einem Antrieb verbunden ist, und an ihrem anderen Stimende zu einer am Stimende des Schneckengehäuses angeordneten Austrittsöffnung, insbesondere einem Extruderkopf, fördert. Bei einer solchen Konstruktion besteht natürlich der Wunsch, die Gangtiefe der Schnecke im Bereich der Einzugsöffnung des Schneckengehäuses möglichst groß zu machen, um das Einzugsverhalten der Schnecke zu verbessem. Dies hat jedoch seine Grenze aus den zuvor genannten Gründen. Im Rahmen der Erfindung besteht jedoch die Möglichkeit, diesen einander widersprechenden Forderungen durch eine spezielle Konstruktion zu entsprechen. Diese Konstruktion besteht darin, dass das Schneckengehäuse im Bereich der Einzugsöffnung eine Tasche bildet, welche einen zusätzlichen Freiraum für in das Schneckengehäuse einzuziehendes Kunststoffmaterial bildet, wobei an jenem Rand der Einzugsöffnung, an welchem die Drehrichtung der Schnecke zum angeschlossenen Behälter gerichtet ist, eine vorzugsweise verstellbare Rippe vorgesehen ist, welche diese Tasche ganz oder teilweise gegen die Einzugsöffnung abschließt. Auf diese Weise lässt sich nämlich trotz reduzierter Gangtiefe der Schnecke ein besseres Einzugsverhalten der Schnecke erreichen.

Es ist jedoch im Rahmen der Erfindung auch durchaus möglich, die Achse der Schnecke radial oder nach Art einer Sekante zum Querschnitt des Behälters anzuordnen, etwa für Agglomeriervorrichtungen, bei denen sich die Gangtiefe der Schnecke gegen die Austrittsöffnung des Schneckengehäuses zu verringert. Wie bekannt, haben Agglomeriervorrichtungen im Vergleich zu Plastifiziervorrichtungen eine verkürzte Schneckenlänge, wobei die Ganggeometrie einer Agglomerierschnecke sich von der Ganggeometrie einer Plastifizierschnecke dadurch unterscheidet, dass die Agglomerierschnecke im Bereich der Einzugszone und im Bereich der daran anschließenden Mittelzone eine im Vergleich zu üblichen Plastifizierschnecken vergrößerte Gangtiefe aufweist und nur im Bereich der dosierenden Meteringszone die Gangtiefe der Agglomerierschnecke gering ist, sodass das Material nur im Bereich der Meteringszone und daher nur kurzzeitig stark komprimiert und geschert, nicht aber plastifiziert wird. Die Agglomerierschnecke liefert daher an ihrem Ausgang Material, welches nicht vollkommen plastifiziert ist, sondern von nur an ihrer Oberfläche angeschmolzenen Teilchen besteht, die gleichsam einer Sinterung zusammengebackt sind.

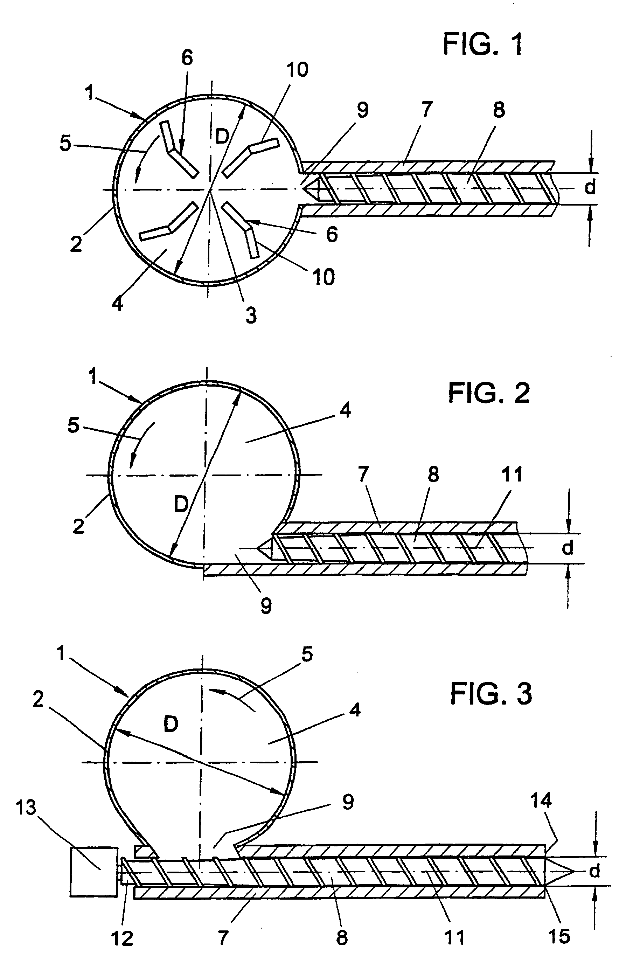

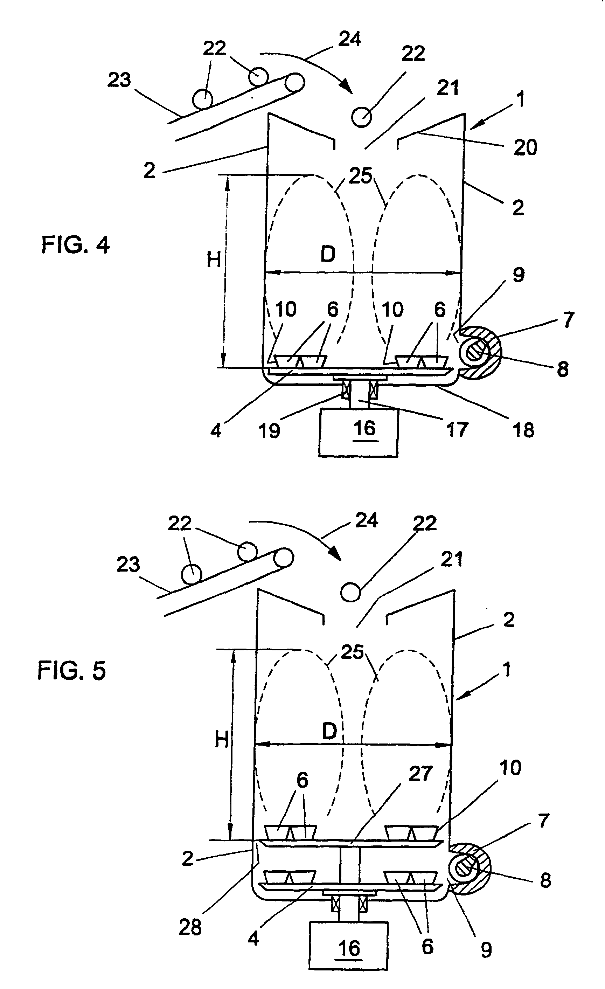

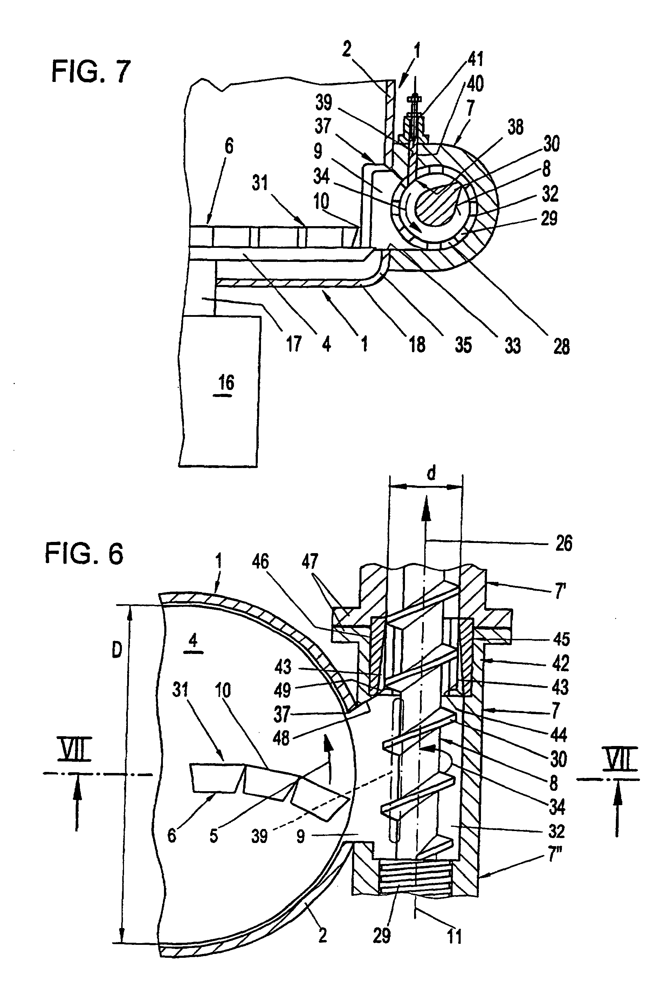

Weitere Merkmale und Vorteile der Erfindung ergeben sich aus der Beschreibung von Ausführungsbeispielen des Erfindungsgegenstandes, welche in der Zeichnung schematisch dargestellt sind. Fig.1 zeigt einen Horizontalschnitt durch ein erstes Ausführungsbeispiel mit radial zum Behälter angeschlossenem Schneckengehäuse. Fig.2 zeigt in ähnlicher Darstellung wie Fig.1 eine Ausführungsvariante, bei welcher die Achse der Schnecke nach Art einer Sekante auf den Querschnitt des Behälters trifft. Fig.3 zeigt eine weitere Ausführungsform, bei welcher das Schnek-kengehäuse tangential an den Behälter angeschlossen ist Fig. 4 ist ein Vertikalschnitt durch einen mit einer einzigen umlaufenden Werkzeugträgerscheibe versehenen Behälter. Fig. 5 zeigt einen ähnlichen Vertikalschnitt durch einen mit zwei solchen Werkzeugträgerscheiben versehenen Behälter. Fig. 6 zeigt eine Anordnung ähnlich Fig. 3, jedoch mit geänderten Verhältnissen im Bereich der Einzugsöffnung des Schneckengehäuses. Fig. 7 ist ein Schnitt nach der Linie VII bis VII der Fig. 6.

Die Zeichnungen sind aus Platzgründen nicht maßstäblich, denn in Wirklichkeit sind die Behälter durchwegs viel größer, als sie in der Zeichnung dargestellt sind.

Bei der Ausführungsform nach Fig.1 hat die Vorrichtung, welche eine Zerreißer-Extruder-Kombination bildet, einen Behälter 1 mit kreisförmigem Querschnitt, dessen Seitenwand 2 im wesentlichen zylindrisch verläuft. Im Behälter 1 läuft um eine mittige vertikale Achse 3 eine Trägerscheibe 4 um, die von unten durch einen nicht dargestellten Antrieb zur Drehbewegung in Richtung des Pfeiles 5 angetrieben ist. Die Trägerscheibe 4 ist im Bodenbereich des Behälters 1 angeordnet und trägt an ihrer Deckfläche mehrere Zerkleinerungs- und Mischwerkzeuge 6, welche auf das in den Behälter von oben eingefüllte, zu bearbeitende Kunststoffmaterial, in der Regel thermoplastische Recyclingware, zerkleinernd und mischend einwirken. Annähernd auf der Höhe dieser umlaufenden Werkzeuge 6 ist an die Seitenwand 2 des Behälters 1 das Gehäuse 7 einer Schnecke 8 radial angeschlossen, welche durch einen am rechten Schnek-kenende angeordneten, nicht dargestellten Antrieb zur Drehbewegung um ihre Achse 11 angetrieben ist. Im vorliegenden Fall ist die Schnecke von einer Extruderschnecke gebildet, die das durch die Einzugsöffnung 9 des Gehäuses 7 der Schnecke 8 zugeführte Kunststoffmaterial plastifiziert und dieses Material im plastifizierten Zustand einem am rechten Ende der Schnecke 8 angeordneten, nicht dargestellten Extruderkopf zuführt Um den Einzug des im Behälter 1 infolge des Einflusses der umlaufenden Werkzeuge 6 in Form einer Mischtrombe, welche entlang der Wand 2 des Behälters 1 hochsteigt, umlaufenden Kunststoffmateriales in die Einzugsöffnung 9 zu begünstigen, können die Werkzeuge 6 mit ihren vorlaufenden Arbeitskanten 10 so abgewinkelt sein, dass sich beim Vorbeilaufen jedes Werkzeuges 6 an der Einzugsöffnung 9 eine spachtelartige Eindrückung des Kunststoffmateriales in die Einzugsöffnung 9 ergibt

Um optimale Bedingungen hinsichtlich der Verweilzeiten des Kunststoffes für die Vorzerkleinerung, die Vortrocknung und die Vorwärmung des Kunststoffmateriales im Behälter 1 zu erzielen, steht der Durchmesser D des Behälters 1 zum Außendurchmesser d der Schneckengänge in folgender Beziehung: $D = 10 \cdot \sqrt[3]{K \cdot d^2}$, wobei D der Behälterinnendurchmesser in Millimeter, d der Schneckendurchmesser in Millimeter und K eine Konstante sind, welche Konstante zumindest 190 beträgt.

Die Ausführungsform nach Fig.2 unterscheidet sich von jener nach Fig.1 lediglich dadurch, dass das Gehäuse 7 der Schnecke 8 nicht radial in bezug auf den Kreisquerschnitt des Behälters 1 (wie bei Fig.1), sondern nach Art einer Sekante an die Seitenwand 2 des Behälters 1 angeschlossen ist. Die Achse 11 der Schnecke 8 durchsetzt daher mit ihrer Verlängerung den Innenraum des Behälters 1. Dies hat zur Folge, dass - gemessen in Umfangsrichtung des Behälters 1 - die Einzugsöffnung 9 breiter ist als bei der Ausbildung nach Fig.1, was den Einzug des zu verarbeitenden Materiales in das Gehäuse 7 der Schnecke 8 begünstigt.

Bei der Ausführungsform nach Fig.3 ist das Gehäuse 7 der Schnecke 8 tangential an die Seitenwand 2 des Behälters 1 angeschlossen, so dass die Einzugsöffnung 9 in der Seitenwand des Gehäuses 7 liegt und nicht am Stimende des Gehäuses 7, wie dies bei den Ausführungsformen nach den Figuren 1 und 2 der Fall war. Eine solche Ausführungsform nach Fig.3 hat den Vorteil, dass die Schnecke 8 vom linken Stimende 12 her durch einen nur schematisch dargestellten Antrieb 13 angetrieben werden kann, sodass das rechte Stimende 14 der Schnecke 8 vom Antrieb freigehalten werden kann. Dies ermöglicht es, die Austrittsöffnung 15 für das von der Schnecke 8 geförderte, plastifizierte oder agglomerierte Kunststoffmaterial an diesem Stimende 14 anzuordnen, z.B. in Form eines nicht dagestellten Extruderkopfes. Das Kunststoffmaterial kann daher ohne Umlenkung von der Schnecke 8 durch die Austrittsöffnung 15 gefördert werden, was bei den Ausführungsformen nach den Figuren 1 und 2 nicht ohne weiteres möglich ist.

Die nach Art von Messern ausgebildeten Werkzeuge 6 sind der Deutlichkeit halber in den Fig. 2 und 3 nicht eingezeichnet.

Bei allen Ausführungsformen ist die Schnecke 8 so dargestellt, dass sich der Kemdurchmesser gegen das Austrittsende der Schnecke zu vergrößert, die Gangtiefe also sich in gleicher Richtung verringert. Es kann jedoch die Ausbildung auch umgekehrt getroffen sein, wenn dies gewünscht ist, wobei sich durch den unterschiedlichen Anschluss des Schneckengehäuses 7 an den Behälter 1 eine unterschiedliche Anordnung des Antriebes 13 für die Schnecke ergibt, wie bereits erwähnt. Es kann daher der Antrieb in der Nähe jenes Bereiches angeordnet werden, in welchem der Kemdurchmesser der Schnecke das größte Drehmoment aufnehmen muss.

Der Kemdurchmesser bzw. die Gangtiefe der Schnecke in ihrem Einzugsbereich muss in den meisten Fällen den vorliegenden Gegebenheiten angepasst werden, insbesondere an die Schüttdichte des im Behälter 1 vorliegenden Kunststoffmateriales.

Die Ausführungsform nach Fig. 4 zeigt einen Behälter 1, dessen wirksame Höhe H annähernd gleich ist seinem Innendurchmesser D. Die Trägerscheibe 4 wird von einem Motor 16 über eine Welle 17 angetrieben, die den ebenen Boden 18 des Behälters 1 durchsetzt und im Boden 18 durch ein nur schematisch dargestelltes Lager 19 gelagert ist. Der Behälter 1 hat oben eine von einem Trichter 20 begrenzte Einfüllöffnung 21, durch die das zu verarbeitende Gut 22, z.B. Portionen aus Kunststofffolien, mittels einer Fördereinrichtung 23 in Richtung des Pfeiles 24 eingeworfen wird. Dieses Gut 22 wird von den umlaufenden Werkzeugen 6 erfasst und in Form einer Mischtrombe 25 hochgewirbelt, wobei das Gut entlang der vertikalen Behälterseitenwand 2 hochsteigt und annähernd im Bereich der wirksamen Behälterhöhe H durch Schwerkrafteinwirkung wieder nach innen und unten in den Bereich der Behältermitte zurückfällt. Günstig ist, dass eine Behältervergrößerung im Sinne der Erfindung die durchschnittliche Verweilzeit des Gutes im Behälter 1 so verlängert, dass in die Einzugsöffnung 9 des Schneckengehäuses 7 stets Gut mit einer annähernd konstanten thermischen und mechanischen Beschaffenheit eintritt, auch wenn das zu verarbeitende Gut in Bezug auf eine solche Verarbeitung schwierig ist, z.B. Folienreste unterschiedlicher Beschaffenheit (Dicke, Größe usw.)

Die Ausführungsform nach Fig. 5 unterscheidet sich von jener nach Fig. 4 dadurch, dass oberhalb der Trägerscheibe 4 für die Werkzeuge 6 noch eine weitere Trägerscheibe 27 koaxial zur Trägerscheibe 4 auf der Welle 17 befestigt ist. Auch die Trägerscheibe 27 trägt Werkzeuge 6, deren Beschaffenheit und Anordnung gleich sein kann wie auf der Trägerscheibe 4, jedoch auch reine Stopfwerkzeuge sein können, welche das Kunststoffgut in die Einzugsöffnung 9 drücken.. Die Trägerscheibe 27 bewirkt eine Vorbearbeitung des in den Behälter 1 eingebrachten Kunststoffgutes 22, welches erst nach dieser Vorbearbeitung durch den Ringspalt 28 zwischen dem Umfang der Trägerscheibe 27 und der Seitenwand 2 des Behälters 1 in den Bereich der unteren Trägerscheibe 4 gelangen kann, wodurch die thermische und mechanische Homogenität des im Behälter 1 vorbearbeiteten Kunststoffmateriales. welches dann in das Gehäuse 7 der Schnecke 8 eingezogen wird, weiter verbessert wird. Hiebei führt die Trägerscheibe 4 mit ihren Werkzeugen 6 das weiterbearbeitete Kunststoffgut in die Einzugsöffnung 9 des Schneckengehäuses 7.

Die wirksame Höhe H des Behälters 1 ist in diesem Fall von der oberen Trägerscheibe 27 aus zu rechnen, da sich die Mischtrombe 25 oberhalb dieser Trägerscheibe ausbildet.

Bei der Ausführungsform nach den Fig. 6 und 7 ist das Gehäuse 7 der Schnecke 8 tangential an den Behälter 1 angeschlossen und steht mit dem Innenraum des Behälters 1 über die Einzugsöffnung 9 direkt in Verbindung. Die Gänge der Schnecke 8 erstrecken sich entgegen der Förderrichtung (Pfeil 26) über die Einzugsöffnung 9 hinaus und gehen dort in ein als Dichtung wirkendes Gewinde 29 über, dessen Steigung jener der Schneckengänge 30 gleich gerichtet ist, jedoch engere Gänge als diese hat. Die Schnecke 8 bzw. ihr Gehäuse 7 können mit einer Heizung und/ oder mit einer Kühlung versehen sein, um das behandelte Kunststoffgut auf einer gewünschten Temperatur halten zu können. Die etwa rechteckige Einzugsöffnung 9 liegt an der Seitenwand des Schneckengehäuses 7, schließt an die Austragsöffnung 37 des Behälters unmittelbar an und ist verhältnismäßig groß bemessen, sodass sie sich bei der dargestellten Ausführungsform über etwa zwei Schneckengänge 30 erstreckt. Die in Achsrichtung des Behälters 1 gemessene Höhe der Einzugsöffnung 9 ist etwa so groß wie der Durchmesser der Schneckengänge 30. Dies sichert, dass die Schnecke 8 das von den Werkzeugen 6, welche eine Zubringeeinrichtung 31 bilden, in die Einzugsöffnung 9 eingedrückte Kunststoffgut in großen Mengen aufnehmen kann. Im Bereich der Einzugsöffnung 9 ist zusätzlich zu den Schneckengängen 30 ein Freiraum im Schneckengehäuse 7 vorgesehen, welcher von einer taschenartigen Erweiterung 32 des Schneckengehäuses 7 gebildet ist. Diese Erweiterung 32 hat über große Teile des Umfanges des Schneckengehäuses 7 die Gestalt eines Hohlzylinders und erstreckt sich in axialer Richtung der Schnecke 8 über zumindest einen Schneckengang 30, im dargestellten Ausführungsbeispiel über etwa 2,5 Schneckengänge (Fig. 6). Die Erweiterung 32 steht mit der Einzugsöffnung 9 in unmittelbarer Verbindung. Die in Umfangsrichtung der Schnecke 8 gemessene Breite der Erweiterung 32 ist über ihre Länge, vorzugsweise konstant, sodass also die Tiefe der von der Erweiterung 32 gebildeten Tasche überall im wesentlichen gleich ist. Die Erweiterung 32 schließt an das Dichtungsgewinde 29 unmittelbar an und erstreckt sich in axialer Richtung der Schnecke 8 nach beiden Seiten über die Einzugsöffnung 9 hinaus. Die in radialer Richtung der Schnecke 8 gemessene Tiefe der Erweiterung 32 beträgt etwa 5 bis 10% des Durchmessers der Schnecke 8. Am unteren Rand 33 (Fig. 7) der Einzugsöffnung 9 geht die Erweiterung 32 stufenlos in die Einzugsöffnung 9 über, sodass sich dort im wesentlichen eine horizontale Fortsetzung der Deckfläche der Trägerscheibe 4 ergibt. Von dort führt ein gekrümmter Behälterabschnitt 35 zu dessen Boden 18. Am oberen Rand der Einzugsöffnung 9, das ist ihr Rand, an welchem die Drehrichtung (Pfeil 34) der Schnecke 8 zum Behälter 1 hin gerichtet ist, hat die Erweiterung 32 hingegen einen Wandteil 38, welcher die Erweiterung 32 gegen die Einzugsöffnung 9 ganz oder teilweise abschließt. Es ist vorteilhaft, diesen Wandteil 38 als verstellbare Rippe 39 auszubilden, die in einer Schlitzführung 40 des Schneckengehäuses 7 geführt und mittels Verstelltrieben 41, z.B. Stellschrauben, auf die Schnecke 8 zu bzw. von ihr weg, stufenlos verstellbar ist. Der Verstellbereich umfasst zweckmäßig die gesamte radiale Tiefe der Tasche 22, sodass in der am weitesten gegen die Schnecke 13 zu vorgeschobenen Stellung die Rippe 39 mit ihrer Stirnfläche am Umfang der Schneckengänge 30 anliegt und daher einen erheblichen Widerstand für das von der Schnecke 8 erfasste Kunststoffgut bei der Drehung der Schnecke bildet. In ihrer vorgeschobenen Stellung, insbesondere in jener Stellung, in weicher die Rippe 39 die taschenartige Erweiterung 32 gegen den Innenraum des Behälters 1 abschließt, bildet die Rippe für das mit der Schnecke mitlaufende Kunststoffgut einen erheblichen Widerstand, sodass das Kunststoffgut laufend zwischen die Gänge 30 der Schnecke 8 gedrückt wird und daher nicht mit der Schnecke mitlaufen kann, sondern von der Schnecke in Achsrichtung weitertransportiert wird. In der zurückgezogenen Stellung der Rippe 39 wird hingegen ein Teil des von der Schnecke 8 in der Einzugsöffnung erfassten Kunststoffgutes wieder in die Einzugsöffnung 9 zurückbefördert, sodass die Förderung der Schnecke 8 in Richtung des Pfeiles 26 verringert wird. Durch wählbare Zwischenstellungen der Rippe 39 lässt sich somit der Förderwirkungsgrad der Schnecke 8 zwischen einem Maximum und einem Minimum nach Belieben einstellen und daher an die vorliegenden Gegebenheiten anpassen. Dies ist insbesondere dann von Vorteil, wenn das Kunststoffgut wechselnde Beschaffenheit hat, z.B. unterschiedliche Dichte, da auf diese Weise Überlastungen der Schnecke 8 und ihres Antriebes vermieden werden.

Unmittelbar an die taschenartige Erweiterung 32 schließt ein Bereich 42 des Schneckengehäuses 7 an, welcher an seiner Innenmantelfläche mehrere Nuten 43 aufweist, die durch von der Mantelwand dieses Bereiches vorstehende starre und unbewegliche Rippen 44 voneinander getrennt sind. Diese Nuten 43 und Rippen 44 verlaufen in Richtung 26 der Schneckenachse 11, können jedoch auch schraubenlinienartig um diese Achse gewunden sein, sie haben jedoch stets eine wesentliche Komponente ihrer Längsrichtung, die in Richtung der Schneckenachse 11 zeigt Die Rippen 44 haben eine derartige Höhe, dass die Rippen mit ihrer der Schnecke 8 zugewendeten Mantelfläche am Umfang der Schneckengänge 30 anliegen und daher gleichsam eine Abstützung für die Schnecke 8 im Bereich 42 bilden. Die Tiefe dieser Nuten 43 verringert sich von der taschenartigen Erweiterung 32 weg, vorzugsweise kontinuierlich und stufenlos. Zweckmäßig haben die Nuten 43 an ihrem Ende, in welches der geförderte Kunststoff eintritt, eine Tiefe, die gleich ist der in Radialrichtung gemessenen Tiefe der Erweiterung 32, sodass am Übergang von der Erweiterung 32 in die Nuten 43 keine Stufe entsteht, jedoch bildet jede Rippe 44 eine solche Stufe. Am anderen Stimende des Bereiches 42 gehen die Nuten 43 sanft in den Schneckenaußendurchmesser über, sodass also dort der Boden der Nuten 43 den Scheitel der Rippen 44 erreicht hat. Die Seitenwände der Nuten 43 bilden auf das von der Schnecke 8 transportierte Kunststoffgut eine einfangende Wirkung. Vorzugsweise ist hiebei jene Seitenwand der jeweiligen Nut 43, welche - gesehen in Umlaufrichtung der Schnecke 8 (Pfeil 34) - nachfolgt, entgegen der Umlaufrichtung der Schnecke geneigt. Die zwischen den Nuten liegenden Rippen haben daher etwa trapezförmigen Querschnitt. Die Breite der Nuten 43 ist zweckmäßig für alle Nuten gleich, ebenso für die Rippen 44. Das in Umfangsrichtung der Schnecke 8 gemessene Verhältnis der Breite der Nuten 43 zur Breite der Rippen 44 beträgt 0,5:1 bis 2:1. Es ist vorteilhaft, die Nuten 43 in einem gesonderten Bauteil des Schneckengehäuses 7 vorzusehen, welcher als leicht auswechselbare Büchse 45 (Fig. 6) ausgebildet ist. Diese Büchse ist in eine zylindrische Ausnehmung 46 des Schneckengehäuses 7 eingesetzt und darin unverdrehbar gehalten, z.B. mittels eines nicht dargestellten Keiles od. dgl. Die Büchse 45 bildet einen Verschleißteil und besteht daher zweckmäßig aus verschleißfestem Material, insbesondere Hartmetall. Um sie leicht auswechseln zu können, sitzt die Büchse 45 zwischen zwei Abschnitten 7', 7" des Schneckengehäuses 7, die miteinander an Flanschen 47 verschraubt sind.

Der abstromseitig angeordnete Rand der Einzugsöffnung 9 ist als Schrägfläche 48, vorzugsweise konisch, ausgebildet und geht in das Stirnende der Rippen 44 bzw. der Nuten 43 sanft über. Dieses zustromseitige Stimende 49 der Rippen 44 kann abgeschrägt sein, vorzugsweise fluchtend mit der Schrägfläche 48, was das Einfangen des Kunststoffgutes in die Gänge der Schnecke 8 begünstigt.

Bei den meisten Anlagen, bei denen an einen in erfindungsgemäßer Weise vergrößerten Behälter eine Plastifizierschnecke angeschlossen ist, hat es sich durch Versuche als vorteilhaft erwiesen, wenn die Plastifizierschnecke 8 in ihrem der Austrittsöffnung 15 benachbarten Abschnitt eine Gangtiefe hat, die zumindest 5%, vorzugsweise mehr als 7% des Schneckendurchmessers beträgt Besonders günstige Werte haben sich durch Versuche im Bereich von 7,5% bis 8,5% des Schneckendurchmessers ergeben.

**Patentansprüche**

1. Vorrichtung zum Vorbehandeln und anschließenden Pastifizieren oder Agglomerieren von Kunststoffen, insbesondere thermoplastischem Abfallkunststoff zu Recyclingzwecken, mit einem Behälter (1), der oben eine Einbringeöffnung (21) für das zu verarbeitende Material hat und in welchem zumindest ein umlaufendes Zerkleinerungs- und/Oder Mischwerkzeug (6) angeordnet ist, wobei das im Behälter (1) vorbehandelte Material in das Gehäuse (7) einer dieses Material plastifizierenden oder agglomerierenden Schnecke (8), z.B. einer Extruderschnecke, geleitet wird, welches Gehäuse (7) vorzugsweise an den Behälter (1) angeschlossen ist, **dadurch gekennzeichnet, dass** der Durchmesser D des Behälters (1) zum Durchmesser d der Schnecke (8) in folgender Beziehung steht:

$$D = 10 . \sqrt[3]{K . d^2},$$

wobei

    D der Innendurchmesser des kreiszylindrischen Behälters (1) in Millimeter ist oder der Innendurchmesser in Millimeter eines auf gleiches Fassungsvolumen umgerechneten fiktiven kreiszylindrischen Behälters gleicher Höhe,
    d der Schneckendurchmesser in Millimeter ist und
    K eine Konstante ist, welche größer oder gleich 190 ist.

2. Vorrichtung nach Anspruch 1, **dadurch gekennzeichnet, dass** K größer ist als 200.

3. Vorrichtung nach Anspruch 1 oder 2, **dadurch gekennzeichnet, dass** die Achse (11) der Schnecke (8) radial oder nach Art einer Sekante zum Querschnitt des Behälters (1) angeordnet ist

4. Vorrichtung nach Anspruch 1 oder 2, **dadurch gekennzeichnet, dass** die Achse (11) der Schnecke (8) tangential zum Querschnitt des Behälters (1) liegt, wobei das Gehäuse (7) der Schnecke (8) eine in seiner Mantelwand liegende Einzugsöffnung (9) für das von der Schnecke (8) zu erfassende Material hat und die Schnecke (8) an ihrem einen Stimende (12) mit einem Antrieb (13) verbunden ist und an ihrem anderen Stimende (14) zu einer am Stimende des Schneckengehäuses (7) angeordneten Austrittsöffnung (15), insbesondere einem Extruderkopf, fördert.

5. Vorrichtung nach Anspruch 4, **dadurch gekennzeichnet, dass** die Plastifizierschnecke (8) in ihrem der Einzugsöffnung (9) benachbarten Abschnitt eine im Vergleich zum restlichen Schneckenabschnitt vergrößerte Gangtiefe hat.

6. Vorrichtung nach einem der Ansprüche 1 bis 5, **dadurch gekennzeichnet, dass** die Plastifizierschnecke (8) in ihrem der Austrittsöffnung (15) benachbarten Abschnitt eine Gangtiefe hat, die zumindest 5%, vorzugsweise mehr als 7% des Schneckendurchmessers beträgt, insbesondere 7,5% bis 8,5% des Schneckendurchmessers.

7. Vorrichtung nach einem der Ansprüche 1 bis 6, **dadurch gekennzeichnet, dass** das Schneckengehäuse (7) im Bereich der Einzugsöffnung (9) eine taschenartige Erweiterung (32) bildet, welche einen zusätzlichen Freiraum für in das Schneckengehäuse (7) einzuziehendes Kunststoffmaterial bildet, wobei an jenem Rand der Einzugsöffnung (9), an welchem die Drehrichtung der Schnecke (8) zum angeschlossenen Behälter (1) gerichtet ist, eine vorzugsweise verstellbare Rippe (39) vorgesehen ist, welche diese Erweiterung (32) ganz oder teilweise gegen die Einzugsöffnung (9) abschließt.

## Claims

1. A device for the pretreatment and subsequent plasticization or agglomeration of plastics materials, in particular thermoplastic waste plastics material for recycling purposes, having a container (1) which at the top has an opening (21) for introducing the material to be processed and in which at least one rotating milling and/or mixing tool (6) is arranged, the material pretreated in the container (1) being guided into the housing (7) of a screw (8) for plasticizing or agglomerating this material, e.g. an extruding screw, which housing (7) is preferably coupled to the container (1), **characterised in that** the relationship between the diameter D of the container (1) and the diameter d'of the screw (8) is given by the following the equation:

$$D = 10 . \sqrt[3]{K.d^2}$$

   in which

   D is the internal diameter of the circular-cylindrical container (1) in mm or the internal diameter in mm of a fictive circular-cylindrical container of the same height recalculated to the same volume capacity,
   d is the screw diameter in mm, and
   K is a constant which is greater than or equal to 190.

2. A device according to Claim 1, **characterised in that** K is greater than 200.

3. A device according to Claim 1 or 2, **characterised in that** the axis (11) of the screw (8) is arranged radially to or so as to dissect the cross-section of the container (1).

4. A device according to Claim 1 or 2, **characterised in that** the axis (11) of the screw (8) is positioned tangentially to the cross-section of the container (I), the housing (7) of the screw (8) having a feeder opening (9) in its casing wall for the material to be caught up by the screw (8) and the screw (8) being connected to a drive (13) at its one end face (12) and at its other end face (14) conveying towards an outlet opening (15) arranged at the end face of the screw housing (7), in particular to an extruder head.

5. A device according to Claim 4, **characterised in that** in its portion adjacent to the feeder opening (9) the plasticizing screw (8) has an increased thread height by comparison with the remaining screw portion.

6. A device according to one of Claims 1 to 5, **characterised in that** in its portion adjacent to the outlet opening (15) the plasticizing screw (8) has a thread height which is at least 5%, preferably more than 7%, of the screw diameter, in particular 7.5% to 8.5% of the screw diameter.

7. A device according to one of Claims 1 to 6, **characterised in that** the screw housing (7) forms a pouch-like enlargement (32) in the region of the feeder opening (9), which enlargement creates supplementary free space for the plastics-material to be drawn into the screw housing (7), a preferably adjustable rib (39) being provided at that margin of the feeder opening (9) at which the direction of rotation of the screw (8) relative to the coupled container (1) is set, which rib wholly or partially closes off this enlargement (32) from the feeder opening (9).

## Revendications

1. Dispositif permettant de prétraiter puis de plastifier ou d'agglomérer des matières plastiques, en particulier des thermoplastiques de rebut, à des fins de recyclage, comprenant un conteneur (1) qui est pourvu, en partie haute, d'une ouverture d'admission (21) de la matière à traiter et à l'intérieur duquel est agencé au moins un outil rotatif de broyage et/ou de mélange (6), la matière prétraitée dans le conteneur (1) étant transférée dans le carter (7) d'une vis sans fin (8) qui la plastifie ou l'agglomère, par exemple une vis sans fin d'extrudeuse, ledit carter (7) étant de préférence raccordé au conteneur (1), **caractérisé en ce que** le diamètre D du conteneur (1) est lié au diamètre d de la vis sans fin (8) par la relation suivante :

$$D = 10 \cdot \sqrt[3]{K \cdot d^2}$$

où

D est le diamètre intérieur du conteneur cylindrique circulaire (1) en millimètres ou le diamètre intérieur en millimètres d'un conteneur cylindrique circulaire fictif de même hauteur et de contenance égale,
d est le diamètre de la vis sans fin en millimètres, et
K est une constante supérieure ou égale à 190.

2. Dispositif selon la revendication 1, **caractérisé en ce que** K est supérieur à 200.

3. Dispositif selon la revendication 1 ou 2, **caractérisé en ce que** l'axe (11) de la vis sans fin (8) est agencé radialement ou de manière à former une sécante à la section transversale du conteneur (1).

4. Dispositif selon la revendication 1 ou 2, **caractérisé en ce que** l'axe (11) de la vis sans fin (8) est agencé tangentiellement à la section transversale du conteneur (1), le carter (7) de la vis sans fin (8) présentant sur son enveloppe extérieure une ouverture d'admission (9) de la matière devant être saisie par la vis sans fin (8) et la vis sans fin (8) étant reliée, par une de ses extrémités frontales (12), à un entraînement (13) et amenant la matière, au niveau de son autre extrémité frontale (14), jusqu'à une ouverture de sortie (15) agencée à l'extrémité frontale du carter de vis sans fin (7), en particulier une tête d'extrudeuse.

5. Dispositif selon la revendication 4, **caractérisé en ce que** la vis sans fin de plastification (8) présente, dans sa portion voisine de l'ouverture d'admission (9), une plus grande profondeur de filet que sur le reste de la vis sans fin.

6. Dispositif selon l'une quelconque des revendications 1 à 5, **caractérisé en ce que** la vis sans fin de plastification (8) présente, au niveau de sa portion voisine de l'ouverture de sortie (15), une profondeur de filet supérieure ou égale à 5 %, de préférence supérieure à 7 % du diamètre de la vis sans fin, et en particulier comprise entre 7,5 % et 8,5 % du diamètre de la vis sans fin.

7. Dispositif selon l'une des revendications 1 à 6, **caractérisé en ce que** le carter de vis sans fin (7) présente, au niveau de l'ouverture d'admission (9), un élargissement (32) en forme de poche, qui forme un espace supplémentaire pour la matière plastique à introduire dans le carter de vis sans fin (7), une nervure (39) de préférence réglable étant prévue sur le bord de l'ouverture d'admission (9) au niveau duquel le sens de rotation de la vis sans fin (8) est orienté vers le conteneur (1) qui lui est raccordé, ladite nervure isolant totalement ou partiellement ledit élargissement (32) de l'ouverture d'admission (9).

FIG. 1

FIG. 2

FIG. 3

FIG. 4

FIG. 5

FIG. 7

FIG. 6